# EUROPEAN PATENT APPLICATION

(11) **EP 1 034 707 A1**
(43) Date of publication of application: **13.09.2000**
(21) Application number: 99104759.8
(22) Date of filing: 10.03.1999
(51) Int. Cl.: A23N 12/08

(54) **Coffee bean roaster**

(71) Applicant: Song, Eugene, Seoul (KR)
(72) Inventor: Song, Eugene, Seoul (KR)
(74) Representative: Pohlmann, Eckart, Dipl.-Phys.

(57) **Abstract**

A coffee bean roaster having an annular coffee bean receptacle (35), an air passageway extending from a source of outside air to the annular coffee bean receptacle (35), and a fan (21) positioned in the air passageway operative to draw air from the outside source through the air passageway and into the annular coffee bean receptacle (35). An air heater (24) is positioned in the air passageway so as to heat air propelled through the air passageway by the fan (21) prior to entering the annular coffee bean receptacle (35). A chaff receptacle (53) is positioned adjacent the annular coffee bean receptacle (35) so as to receive chaff from beans roasted in the annular coffee bean receptacle (35) and an air exhaust passageway extends from the annular coffee bean receptacle (35) to a region proximate to the chaff receiving receptacle (53) and is operative to establish an exhaust air flow that carries the chaff to the chaff receptacle (53).

## Description

### RELATED APPLICATION

The present application is a continuation-in-part of Application Serial No. 09/132,383 filed August 11, 1998, now abandoned.

### FIELD

This invention relates to a coffee bean roaster capable of roasting coffee beans with heated air, characterized in that raw coffee beans and pop corn can be uniformly roasted within the space between a blower and a roasting vessel by generating a strong whirlwind from the heated air blower.

### BACKGROUND

In general, coffee is classified as raw bean coffee, raw bean ground coffee, and instant coffee. Since raw bean coffee is superior in taste and fragrance among them, 90% of the population drinking coffee in Europe are purchasing at a high price raw bean coffee which is roasted and sold by a package from a factory. Most families enjoying roasted bean coffee have a coffee grinder or mill. Roasting raw beans at home not only provides a fresh taste and fragrance but also is very economical in view of the price difference of 1:3 or 1:5 between raw beans and processed beans.

Also, vacuum-wrapped roasted bean coffee cannot be stored over 6 months after packaging at the factory, but the taste of coffee from roasting raw beans 1-2 years after being harvested is at its best because raw beans which are stored for a period of time mature well. Therefore, at this time a roaster is needed for home use which allows the storage of raw beans conveniently since sealing up raw beans for storage is not required, and which is able to roast at one time approximately 160 g raw beans which yields up to a maximum of 20 cups of coffee per day.

The prior roaster for roasting coffee beans with heated air was previously filed on October 1, 1994 by the present applicant as U.S. Patent No. 5,564,331. In such prior roaster, the quality of roasting depends on the generation of a whirlwind, but the whirlwind was not strong because it was generated at the bottom of the roasting vessel; the power consumption was as much as approximately 1300-1400w; the fan was noisy because the motor had to be rotated at a speed as high as over about 11,000 rpm for generating the whirlwind; the apparatus was not easily hermetically sealed nor kept because the roasting vessel is composed of detachable glass; users are required to handle it with care; and there were difficulties in assembling, exporting, selling, packing, and transporting the apparatus due to a number of parts and the high production cost.

### SUMMARY OF THE INVENTION

The object of this invention is to provide an improved coffee bean roaster for home use, in which a heated air blower generates a strong whirlwind in the center of a roasting vessel in order to smoothly roast raw coffee beans, and facilitate the removal of hulls.

To obtain the object, there is provided a coffee bean roaster having an annular coffee bean receptacle, an air passageway extending from a source of outside air to the annular coffee bean receptacle, and a fan positioned in the air passageway operative to draw air from the outside source through the air passageway and into the annular coffee bean receptacle. An air heater is positioned in the air passageway so as to heat air propelled through the air passageway by the fan prior to entering the annular coffee bean receptacle. A chaff receptacle is positioned adjacent the annular coffee bean receptacle so as to receive chaff from beans roasted in the annular coffee bean receptacle and an air exhaust passageway extends from the annular coffee bean receptacle to a region proximate to the chaff receiving receptacle and is operative to establish an exhaust air flow that carries the chaff to the chaff receptacle.

### BRIEF DESCRIPTION OF THE DRAWINGS

This invention will be better understood and its various objects and advantages will be more fully appreciated from the following description taken in conjunction with the accompanying drawings, in which:
Fig. 1 is a perspective view showing the assembled state of the coffee bean roaster;
Fig. 2 is a perspective view showing the exploded state of the coffee bean roaster;
Fig. 3 is a vertical cross-sectional view of the coffee bean roaster;
Fig. 4 is a schematic view showing another embodiment of the coffee bean roaster; and
Fig. 5 is a sectional view of the coffee bean roaster showing the flow of air and hulls.

### DETAILED DESCRIPTION OF THE PREFERRED EMBODIMENT

Hereinafter, this invention will be described in detail with reference to the drawings.

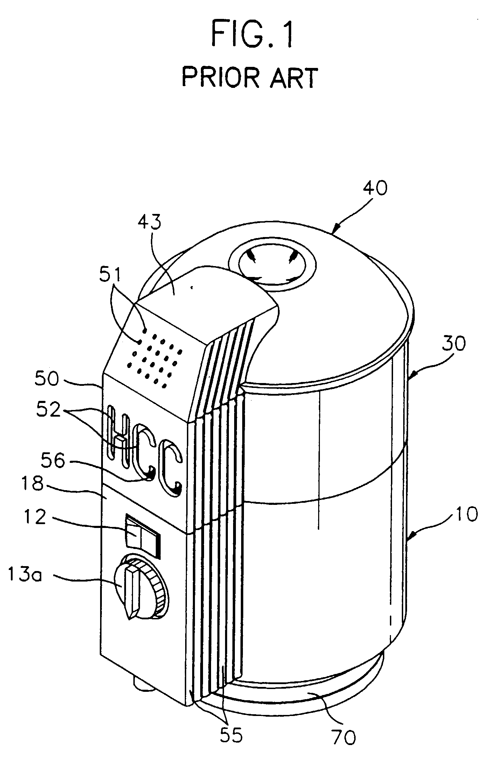

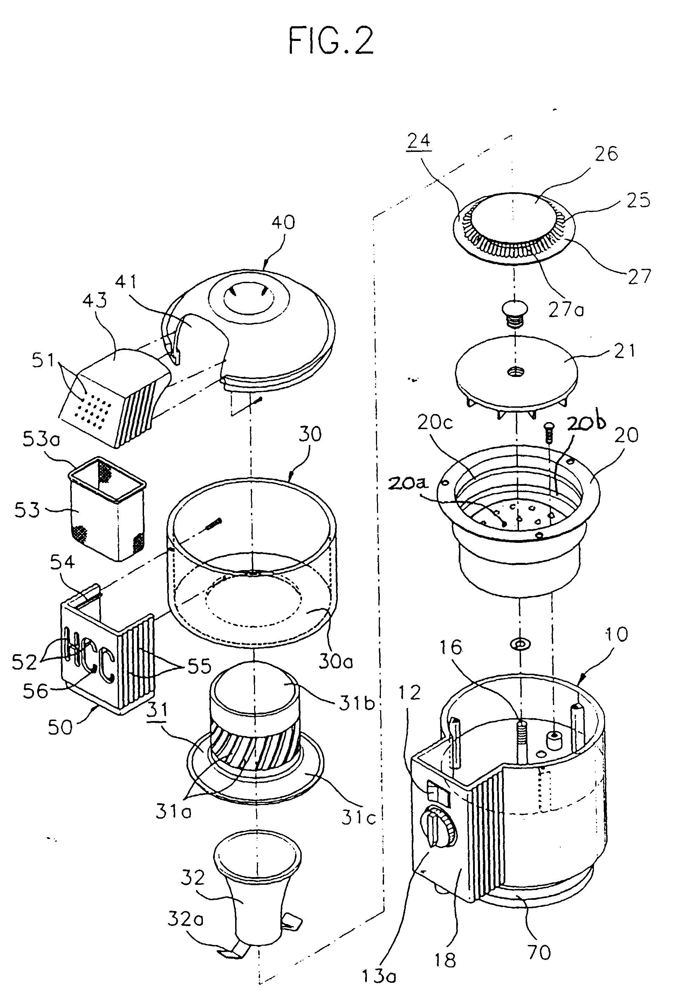

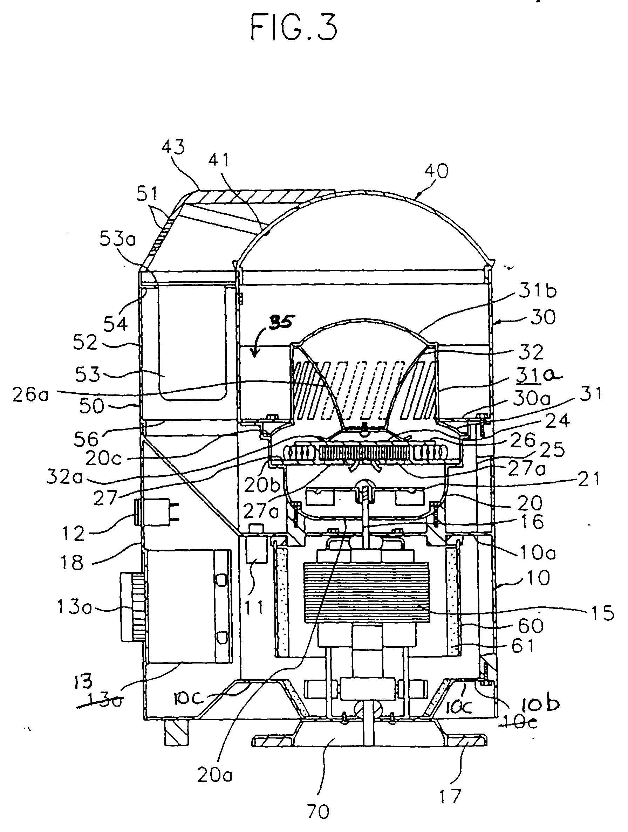

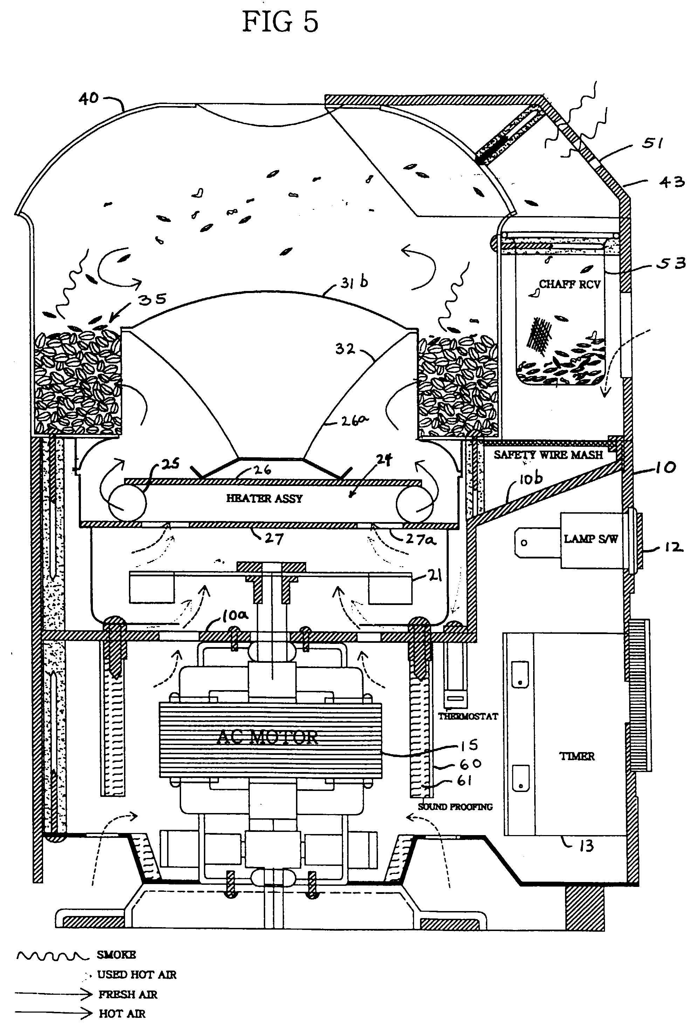

As illustrated in Figs. 1-3 and 5, the present invention comprises a housing **10**, a roasting vessel **30**, a lid **40**, a guiding duct **43**, and a handle duct **50**.

In a cylinder-shaped housing **10** with a duct connection part **18** protruded in one side, a lower plate **10b** provided with air inlets **10c** inducing the exterior air is formed on the bottom face, a plurality of rubber feet **17** are provided for preventing slippage to the lower end of the lower plate **10b** having a skirt shape, a cord rolling member **70** is installed for manually rolling in a power cord supplied with the power, a partition plate **10a** inclined at the side of the duct connection part **18** is formed in the upper end, so that a placement bowl **20** in which a heat generating part is installed is formed in the upper portion of the partition plate **10a** and heat-resistant electric parts are installed in the lower portion, a heater mounting projection **20b** mounting a heater assembly **24** thereon and a guide mounting projection **20c** mounting the lower end of a guiding part **31c** thereon are formed inside the placement bowl **20**, a noise absorbing sponge **61** for reducing mechanical noise and a motor supported by an electromagnetic wave shield iron plate **60** for shielding electromagnetic waves are installed on the bottom face of the partition plate **10a**, a motor axis **16** connected to the motor **15** penetrates the bottoms of the partition plate **10a** and the placement part **20**, a fan **21** which rotates by receiving the transmitted rotation power of the motor **15** is horizontally installed at the edge of the motor axis **16**, air inducing holes **20a** for inducing waste heat and exterior air are formed on the bottom face of the placement part **20**, a heater upper plate **26** and a heater lower plate **27** which has lower part inducing holes **27a** are placed in the upper end of the placement part **20**, a heater assembly **24** in which a heater coil **25** is placed is formed between the two plates, a thermostat **11** measuring the temperature of a waste heat, and opening and closing the supply of power to the heater coil **25** is installed in the partition plate **10a**, a lamp switch **12** and a knob **13a** capable of being recognized from the outside are provided to the duct connection part **18**, and the knob **13a** has a timer **13** connected thereto built-in.

Also, in a roasting vessel **30**, a cylindrical and bottom-opening heated air blower **31** is connected to a skirt-shaped guiding part **31c** for inducing air into the interior of the heated air blower **31**, the upper end of the guiding part **31c** is supported by an annular plate **30a** and the lower end is mounted on the guide mounting projection **20c** so that the heated air blower **31** is fixed, the upper portion of the heated air blower has a dome shape so that raw beans may slip down from the upper end of the heated air blower **31** and gather between the roasting vessel **30** and the heated air blower **31** which forms an annular coffee bean receptacle **35**. When raw beans are put into the roasting vessel **30**, blowing holes **31a** having a **60** degree angle in the oblique direction are formed on the outer perimeter of the heated air blower **31**. A trumpet-shaped spindle **32** is inserted to the interior of the heated air blower **31**, so that the whirlwind generated from the interior of the heated air blower **31** is easily exhausts through the blowing holes **31a**, and a pressing spring **32a** formed in the lower edge of the spindle **32** is placed on the heater upper plate **26** in order to support the heater assembly.

The heated air blower **31** is formed in a protruded and cylindrical shape in the central part of the roasting vessel and the blowing holes **31a** have more than **16** inlet and outlet slots, of which the intervals are regular, the tilt angle is approximately 60°, the gap of each blowing opening is 1.6∼1.8 mm, and the length of the oblique is 14-16 mm.

The lid **40** has a bottom-opening hemisphere shape, is fixed by sticking to the guiding duct **43** with screws, and is attachably and detachably combined with the upper end of the roasting vessel **30**.

The guiding duct **43** sticks to the lid **40** with screws enclosing lid opening **41** in order to be linked to the lid **40** and a handle duct **50**, and on the outer surface are formed a plurality of exhaust holes **51** through which the smoke generated during the roasting of raw beans is exhausted.

The air inducing holes **20a** are formed on the bottom face of the placement part **20,** and the fan **21** is rotated and blows in the lower end. A heater assembly **24** is mounted on a heater mounting projection **20b**. The upper end of the spindle **32** is supported by the upper end of the heated air blower **31**, and a pressing spring **32a** is connected to the lower end of the spindle **32, 50** that the lower end is mounted on a heater upper plate **26** in order to fix the heater assembly **24**.

In a heat-resistant handle duct **50** capable of standing heat at the temperature of 230 degrees max. by being made from phenol which is a heat-resisting resin, the upper end is linked to the guiding duct **43** and affixed to the roasting vessel with screws. The lower end is combined with the upper end of the body **10**. A plurality of air inlets **52** are formed on the outer surface so that fresh exterior air can flow in, a suspending projection **53a** is formed in the upper end in such a way that a suspended projection **54** of a filter sieve **53** is suspended and fixed by the suspending projection **53a**, a safety filter sieve **56** having smaller meshes than the filter sieve **53** is placed in the inner lower end, and projection parts **55** are formed on both of the outer sides for an easy grip.

In addition, the housing **10** is also made from phenol which is a heat-resisting resin. The partition plate **10a** is integrally formed therein so that the upper portion and the lower portion can be separated, and waste gas prevents the heat of the roasting vessel from being transmitted to the motor **15**, the timer **13**, the lamp switch **12**, and the electric wires in the lower portion.

The process for roasting raw beans or beans by using the coffee bean roaster of the present invention assembled above is as follows: First of all, raw beans are put into the roasting vessel **30** after opening the lid **40**. At this time, the raw beans are fed to the height of the dome **31b** formed in the heated air blower **31**, and thereby the quantity of the raw beans put into the interior of the roasting vessel **30** amounts to approximately 160g. And then, the appropriate time is set according to the required roasting state by operating the knob **13a** mounted on the duct connection part **18**. Namely, the descriptions such as very dark indicating heating for about 10 minutes in order to make espresso coffee, dark indicating heating for about 8 minutes in order to make regular coffee, and "regular" and "weak" indicating heating for about 7 minutes and 5 minutes, respectively, in order to make weak mocha coffee, are indicated on the front **20** face of the knob **13a**, and if the power is applied, the timer **13** regulates the heating time of the raw beans.

As described above, if the heating time is set, the heater coil **25** is energized, and the heating starts, the lamp switch **12** indicates by being lit that the heater coil **25** is being operated, and the fan **21** is rotated by the operation of the motor, so that air ascends into the interior of the heated air blower **31**. Namely, the air induced through the air inlets **52** formed in the handle duct **50** moves to the inside of the handle duct **50**, and then it moves along the inclined part of the partition plate **10a**, until it is induced to the air inducing hole **20a** formed on the bottom of the placement part **20**. At this time, since the motor **15** makes a mechanical noise by rotating at 8,000-10,000 rpm, the noise absorbing sponge **61** absorbs the noise, and the electromagnetic wave shield iron plate **60** shields the electromagnetic waves.

The exterior air induced as described above ascends to the heated air blower **31** by the fan **21**. And then, the ascending induced air moves to the upper portion through the lower part inducing hole **27a** of the heater lower plate and is heated by the heater coil **25**. The heated hot air is induced to the bottom of the heated air blower **31** through the outer side of the heater upper plate **26**.

Also, the heated air in the interior of the placement part **20** above the heater assembly **24** comes out of the heated air blower **31** through the blowing holes **31a** by the strong vortex injected by the pressure in the trumpet-shaped wall **26a** of spindle **32**.

At this time, since the blowing holes **31a** are formed at about a 60 degree angle on the outer perimeter of the heated air blower **31**, the air forms a strong whirlwind while coming out. The heated air of the whirlwind forms a vortex by touching the wall of the roasting vessel **30**, so that the coffee beans easily ascend rotatively. Therefore, the hot whirlwind air formed as above allows the raw beans in the roasting vessel **30** to move upwardly and downwardly, so that the raw beans are roasted uniformly.

Also, since the upper end of the heated air blower **31** has a dome shape, the raw beans which have ascended to the upper portion of the heated air blower **31** easily slip down along the surface of the dome **31b**.

Since the raw beans rub with one another in the roasting vessel **30** while rotating and moving upwardly and downwardly, once the beans have expanded, their hulls come off. Also, the hulls blow upwardly by the whirlwind air ascending by means of the blow out power of the fan **21**, and then are caught in the filter sieve **53** installed in the upper end of the lower portion of the handle duct **50**.

The smoke generated during the roasting of the raw beans in the roasting vessel **30** rises up, and then is exhausted through the exhaust holes **51** formed in the upper portion of the handle duct **50**.

The air generated from within the placement part **20** by the heater assembly **24** becomes waste heat after the raw beans are roasted in the roasting chamber or annular coffee bean receptacle **35**. The waste heat is not exhausted outwardly but descends along the lower side of the lid **40** in the handle duct **50**, until it is mixed with the exterior air induced through the air inlets **52**. At this time, the waste heat and the induced exterior fresh air are mixed in the ratio of 80% and 20%. The air mixed with the waste heat as above descends along the inclined side of the partition plate **10a** at about a 120° C, and then it is induced again through the air inducing holes **20a** formed on the bottom face of the placement part **20**. Also, since the heated hot air blower **31** has sufficient space in its interior, the heated air and the non-heated air are easily mixed therein, and the heated air accumulates. The mixed air as above provides the roasting vessel **30** with the heated air by being continuously circulated by the heater assembly **24** and the fan **21**, so that the raw beans are roasted with a significant power saving due to re-using the heated exhaust air. And, the spindle **32** is inserted into the interior of the heated air blower **31**, so that a whirlwind generated from the interior of the heater air blower **31** is easily exhausted through the blowing holes **31a**.

The air flowing into to the lower end of the main body through the air inlets **10c** formed in the lower end of the housing **10** cools the motor **15**.

The normal temperature in the inside of the raw bean roasting vessel is approximately 200° C-220°C. However, because of the thermostat **11** installed therein, if the temperature rises over 220°C., the thermostat **11** is operated to interrupt the power supplied to the heater coil **25**, and only the fan **21** rotates. Accordingly, since the air is not heated, the raw beans are roasted only with the remaining heat. After that, if the temperature of the waste heat falls below 120°C. of the normal temperature the temperature of the supplied air increases to be approximately 200° C-220° C, the normal temperature, by supplying again the power to the heater coil **25**.

If the timer **18** reaches the set time, the power of the heater coil **25** is interrupted. However, the motor **15** and the fan **21** are continuously supplied with the power, so that only cold air is induced to the housing **10** through the air inlets **52** of the handle duct **50**, and then the fresh air cools not only the hot roasted coffee beans in the roasting vessel **30** but also the handle duct **50.** The cooling time is set in the timer **13** at about three minutes, and if the timer **13** is off three minutes later, the fan stops rotating because the power supplied to the motor **15** is interrupted.

If the coffee beans are roasted appropriately by means of the operation of the raw coffee bean roaster as above, the lid **40** is to be separated from the roasting vessel **30** by raising the lid **40** upwardly. And then, after the handle **53b** of the filter sieve **53** provided in the handle duct **50** is gripped and the filter sieve **53** is raised, the hulls of the raw beans accumulated inside are thrown away. If the raw bean roaster is tilted after gripping the outside of the handle duct **50**, the roasted raw beans inside the roasting vessel **30** fall. At this time, since projection parts **41** are formed on both of the outer sides of the handle duct **50**, the gripping hand prevents slipping. If the filter sieve **53** is inserted into the handle duct **50**, the suspended projection **54** of the filter sieve **53** is suspended to be fixed by the suspending projection **53a** formed in the upper end of the handle duct **50.** And then, the lid **40** and the upper portion of the handle duct **50** are combined with the roasting vessel **30** and the lower portion of the handle duct **50**.

In the event that the roasting vessel is operated when the filter sieve **53** is not positioned at the predetermined position in the roasting vessel or after the filter sieve **53** is detached, and in the event that the hulls of the roasted raw beans are so small that the hulls pass through the filter sieve **53**, the meshes formed in the lower portion of the filter sieve **53** prevent the hulls of the raw beans from being induced to the housing by the small safety filter sieve **56**.

If the power cord is detached from the socket at home after using the roasting vessel, the power cord is automatically rolled in by the cord rolling member **16**.

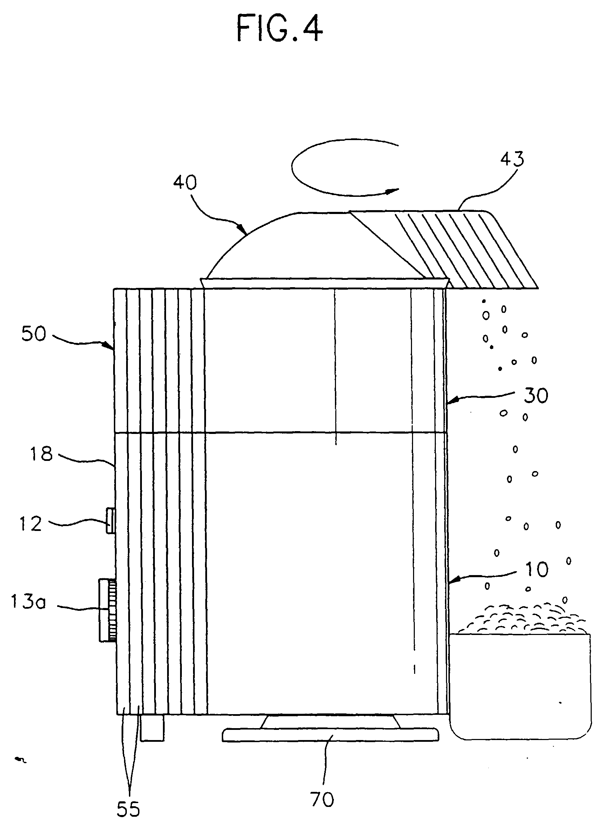

In addition, the process for making popcorn by using the **5** roasting vessel is as shown in Fig. 4.

First of all, the lid **40** is opened, and the corn kernels which are the material of the popcorn are put into the roasting vessel. As in coffee bean roasting processing, the kernels are popped by the heated air by operating the heater assembly **24** for about one minute with the lid closed. If the kernels start to sound popped after about one minute, as shown in Fig. 4, the upper portion of the handle duct **50** is made to turn toward the other side not to cover up the lower portion of the handle duct **50** by rotating the upper portion of the handle duct **50** combined to the lid **40**. The corn kernels are then popped by the heated air within the roasting vessel, and the popped kernels blow upwardly, and hit and collide repeatedly against the bottom surface of the lid **40**, until the popped kernels are naturally discharged through the guiding duct **43** of the lid **40** to the outside of the handle duct **50**. In the above, since the capacity of the heater assembly **24** is based on the waste heat, after the kernels are sufficiently heated, they can be roasted even with a slight heat.

Since the lid **40** is formed high in the roasting vessel as above, peanuts or beans as well as raw beans or popcorn can be easily roasted.

As described in detail above, since a plurality of blowing holes **31a** are formed in the oblique direction on the outer surface of the heated air blower **31** formed in a protruded and cylindrical shape in the central part of the roasting vessel **30,** a strong whirlwind is generated. The whirlwind forms a vortex by touching the wall of the roasting vessel **30**, which allows the raw beans to ascend rotatively, so the capability to roast the raw beans and to remove their hulls is excellent. The power consumption can be reduced by 30-40% by re-using the circulated waste heat generated inside the roasting vessel without exhausting it outside. This invention is small and simple in size, convenient in use, and low in sound during use. Also, popcorn can be simply popped. Because of the small number of parts, this invention has few troubles, can be easily assembled, and the packing and carrying of the product is convenient. Furthermore, the production cost is lower than in previous roasters.

While this invention has been particularly shown and described with reference to particular embodiments thereof, it will be understood by those skilled in the art that various changes in form and details may be effected therein without departing from the sprit and scope of the invention as defined by the appended claims.

## Claims

1. A coffee bean roaster, comprising:
(a) an annular coffee bean receptacle;
(b) an air passageway extending from a source of outside air to said annular coffee bean receptacle;
(c) a fan positioned in said air passageway operative to draw air from the outside source through said air passageway and into said annular coffee bean receptacle;
(d) an air heater positioned in said air passageway so as to heat air propelled through said air passageway by said fan prior to entering said annular coffee bean receptacle;
(e) a chaff receptacle positioned adjacent said annular coffee bean receptacle so as to receive chaff from beans roasted in said annular coffee bean receptacle; and
(f) an air exhaust passageway extending from said annular coffee bean receptacle to a region proximate to said chaff receiving receptacle operative to establish an exhaust air flow that carries the chaff to said chaff receptacle.

2. A coffee bean roaster according to claim 1, wherein said annular coffee bean receptacle has apertures around an inner interior wall thereof to permit entry of heated air.

3. A coffee bean roaster according to claim 2, wherein said apertures are regularly spaced apart elongated apertures inclined to the vertical.

4. A coffee bean roaster according to claim 3, wherein said apertures are inclined to an axis of said annular coffee bean receptacle by approximately 60 degrees.

5. A coffee bean roaster according to claim 1, including a return air passageway extending from said chaff receptacle to said heater chamber to permit heated exhaust air to return to said air passageway.

6. A coffee bean roaster according to claim 5, wherein said return air passageway has a plurality of fresh air holes to permit outside air to enter and mix with said heated exhaust air prior to reaching said air passageway.

7. A coffee bean roaster according to claim 1, including a motor coupled to said fan operative to drive said fan and a sound proofing shield enclosing said fan and a portion of said air passageway.

8. A coffee bean roaster according to claim 7, including an electromagnetic shield surrounding said motor.

9. A coffee bean roaster according to claim 7, wherein said air passageway includes a motor enclosing portion between said sound proofing shield and said motor, a fan chamber and a heater chamber, wherein a lower apertured plate separates said motor enclosing portion from said fan chamber and an upper apertured plate separates said fan chamber from said heater chamber.

10. A coffee bean roaster according to claim 1, including a dome-shaped lid covering said exhaust passageway having a lid opening to permit the escape of exhaust air and to allow said chaff to deposit into said chaff receptacle.

11. A coffee bean roaster according to claim 1, including a guide duct enclosing said lid opening, said guide duct operative to guide chaff to said chaff receptacle wherein said guide duct has smoke openings to permit the escape of smoke.

12. A coffee bean roaster according to claim 1, wherein an area in the interior of said annular coffee bean receptacle is dome shaped so that raw beans may slip down the sides towards the annular coffee bean receptacle.

13. A coffee bean roaster according to claim 2, including a heater chamber having an upper wall, a plenum chamber adjacent said heater chamber operative to collect and feed heated air through the apertures in said interior wall, said plenum chamber having a trumpet faced inner surface extending from said heater chamber to an upper region of said interior wall above said apertures so as to create a region of increased pressure adjacent said apertures.

14. A coffee bean roaster according to claim 11, wherein said dome-shaped lid and guide duct may be rotated away from said chaff receptacle and be operative to discharge popcorn into a popcorn container.

15. A coffee bean roaster according to claim 7, including a timer coupled to said air heater and to said motor operative to shut off said air heater after a preselected time and to shut off power to said motor a predetermined delay time after shutting off power to said air heater.
